# EUROPEAN PATENT APPLICATION

(11) **EP 4 730 676 A1**
(43) Date of publication of application: **22.04.2026**
(21) Application number: 23946597.4
(22) Date of filing: 24.07.2023
(51) Int. Cl.: H04B 10/61, H04B 10/077

(54) **OPTICAL TRANSMITTER-RECEIVER AND OPTICAL RECEIVER**

(71) Applicant: MITSUBISHI ELECTRIC CORPORATION, Chiyoda-ku Tokyo 100-8310 (JP)
(72) Inventor: SANO, Hayato, Tokyo 100-8310 (JP); MATSUDA, Keisuke, Tokyo 100-8310 (JP)
(74) Representative: Plasseraud IP
(86) International application number: PCT/JP2023/026913
(87) International publication number: WO 2025/022511

(57) **Abstract**

An optical transmitter (100) is provided with: a modulation signal generation unit (110) that generates a modulation signal that is a digital signal in which a first pilot symbol signal comprising a first symbol period and a second pilot symbol signal comprising a second symbol period are inserted into the data to be transmitted; and an optical modulation unit (130) that modulates CW light from a CW light generation unit (140) on the basis of the modulation signal converted to an analog signal by a digital/analog conversion unit (120) to generate modulated light into which the first pilot symbol signal and the second pilot symbol signal are inserted. An optical receiver (200) is provided with: a coherent detection unit (210) that receives polarization-multiplexed modulated light into which the first pilot symbol signal comprising the first symbol period and the second pilot symbol signal comprising the second symbol period are inserted, and outputs an analog electrical signal by coherent detection of the received modulated light; and a reception-side digital signal processing unit (240) having a frequency difference compensation unit (247) that calculates a phase difference using the first pilot symbol signal inserted into the received polarization-multiplexed modulated light and the second pilot symbol signal adjacent to the first pilot symbol signal having been extracted from the digital signal from an analog/digital converter unit (230), and compensates for the frequency of the received digital signal.

## Description

### TECHNICAL FIELD

The present disclosure relates to an optical transmission and reception device that performs digital coherent optical communication.

### BACKGROUND ART

In the field of optical fiber communication, digital coherent technology is widely applied in optical metro core networks and submarine optical cable systems.

In digital coherent optical communication, higher performance and higher functionality including improvement in a data rate are pursued.

In particular, according to an optical transceiver of a digital coherent system, one optical transceiver can generate a plurality of sub-carrier signals that does not interfere on a frequency axis in a digital domain. Furthermore, in recent years, a technique of allocating different information to individual subcarriers and simultaneously accommodating various services has been disclosed.

According to simultaneous accommodation in this manner, efficiency in hardware utilization and space saving can be achieved.

For example, Non-Patent Literature 1 discloses a technique of digital coherent optical communication capable of transmitting and receiving sub-carrier signals.

Furthermore, with regard to the digital coherent system, Patent Literature 1 discloses an optical transmission system in which, in order to perform phase compensation based on phase variation that occurs in an optical fiber transmission path between a transmission device and a reception device, a pilot symbol is inserted and output for every K symbols in a data string in the transmission device and the reception device detects a pilot symbol in a data string, estimates phase variation from a reference symbol stored in a predetermined storage device, and compensates for a residual frequency offset on the basis of the phase variation.

### CITATION LIST

### NON-PATENT LITERATURES

Non-Patent Literature 1: H. Sun et al, "800G DSP ASIC Design Using Probabilistic Shaping and Digital Sub-Carrier Multiplexing", JOURNAL OF LIGHTWAVE TECHNOLOGY, VOL. 38, NO. 17, SEPTEMBER 1, 2020, p.p.4744-4756
Patent Literature 1: WO2014/126132

### SUMMARY OF INVENTION

### TECHNICAL PROBLEM

In an optical receiver disclosed in Non-Patent Literature 1, an analog-to-digital converter (ADC) converts a voltage signal, which is detected by optical coherent detection and output, into a digital signal.

In general, when a sampling speed of the analog-to-digital converter is high, an analog reception signal before analog-to-digital conversion can be accurately obtained as a digital signal, waveform distortion can be accurately compensated in digital signal processing, and signal quality after reception can be improved.

However, for example, when a field programmable gate array (FPGA) having a sampling rate or a throughput of several gigabits is used for the digital signal processing, or when digital coherent signals of a low-to-medium speed are handled in an optical receiver, such as when a modulation rate of each subcarrier is low due to a sub-carrier multiplexing system, a frequency difference between transmission and reception optical carrier waves deteriorates the capability of compensation for waveform distortion in the reception-side digital signal processing.

While a pilot symbol is inserted every K symbols in the optical transmission system of Patent Literature 1, a time interval between adjacent pilot symbols is long, which causes an estimation error in phase compensation when there is a difference between a frequency of the optical carrier wave of the transmission device and a frequency of the optical carrier wave of the reception device.

The present disclosure has been conceived in view of the points described above, and an object is to obtain an optical transmission and reception device having a compensation function for degrading factors of waveform distortion caused by a difference in frequency between transmission and reception optical carrier waves in an optical receiver that handles digital coherent signals of a low-to-medium speed.

### SOLUTION TO PROBLEM

An optical transmission and reception device according to the present disclosure includes an optical transmitter and an optical receiver, in which the optical transmitter includes: a modulation signal generating unit that generates a modulation signal that is a digital signal for optical modulation in which a first pilot symbol signal having a first symbol period and a second pilot symbol signal having a second symbol period different from the first symbol period are inserted into data to be transmitted; a digital-to-analog conversion unit that converts the modulation signal that is the digital signal generated by the modulation signal generating unit into a modulation signal including an analog signal; and an optical modulation unit that generates modulated light into which the first pilot symbol signal having the first symbol period and the second pilot symbol signal having the second symbol period are inserted by modulating CW light from a CW light generating unit on the basis of the modulation signal converted into the analog signal by the digital-to-analog conversion unit, and the optical receiver includes: an optical coherent detecting unit that receives polarization-multiplexed modulated light into which the first pilot symbol signal having the first symbol period and the second pilot symbol signal having the second symbol period different from the first symbol period are inserted, coherently detects the received modulated light, and outputs an analog electric signal; an analog-to-digital conversion unit that performs analog-to digital conversion on the analog electric signal from the optical coherent detecting unit to output the signal as a digital signal; and a reception-side digital signal processing unit including a frequency difference compensating unit that receives the digital signal from the analog-to-digital conversion unit, calculates a phase difference using the first pilot symbol signal having the first symbol period and the second pilot symbol signal having the second symbol period different from the first symbol period and adjacent to the first pilot symbol signal, the first pilot symbol signal and the second pilot symbol signal being inserted into the received polarization-multiplexed modulated light extracted from the received digital signal, and compensates a frequency of the received digital signal.

### ADVANTAGEOUS EFFECTS OF INVENTION

According to the present disclosure, in an optical receiver that handles digital coherent signals of a low-to-medium speed, a decrease in capability of compensation of waveform distortion in digital signal processing by an analog-to-digital converter can be suppressed.

### BRIEF DESCRIPTION OF DRAWINGS

FIG. 1 is a block diagram illustrating a configuration of an optical transmission and reception device according to a first embodiment.
FIG. 2 is a block diagram illustrating a configuration of a transmission-side digital signal processing unit in the optical transmission and reception device according to the first embodiment.
FIG. 3 is a block diagram illustrating another configuration of the transmission-side digital signal processing unit in the optical transmission and reception device according to the first embodiment.
FIG. 4 is a block diagram illustrating a configuration of a reception-side digital signal processing unit in the optical transmission and reception device according to the first embodiment.
FIG. 5 is a diagram illustrating an exemplary symbol signal sequence into which a first pilot symbol signal P_{A} and a second pilot symbol signal P_{B} of a digital coherent system are inserted in the optical transmission and reception device according to the first embodiment.
FIG. 6 is a diagram illustrating another exemplary symbol signal sequence into which the first pilot symbol signal P_{A} and the second pilot symbol signal P_{B} of the digital coherent system are inserted in the optical transmission and reception device according to the first embodiment.
FIG. 7 is a diagram for explaining, on a frequency axis, a single carrier signal of the digital coherent system used in the optical transmission and reception device according to the first embodiment.
FIG. 8 is a diagram for explaining, in an IQ signal space, an effect on compensation of a difference in optical frequency in the optical transmission and reception device according to the first embodiment.
FIG. 9 is a diagram for explaining, in the IQ signal space, the compensation of the difference in optical frequency illustrated as a comparative example.
FIG. 10 is a diagram illustrating an exemplary symbol signal sequence into which one pilot symbol signal P of the digital coherent system is inserted in the comparative example.
FIG. 11 is a diagram illustrating another exemplary symbol signal sequence into which one pilot symbol signal P of the digital coherent system is inserted in the comparative example.
FIG. 12 is a diagram illustrating a hardware configuration of the optical transmission and reception device according to the first embodiment.
FIG. 13 is a block diagram illustrating a configuration of a transmission-side digital signal processing unit in an optical transmission and reception device according to a second embodiment.
FIG. 14 is a block diagram illustrating a configuration of a reception-side digital signal processing unit in the optical transmission and reception device according to the second embodiment.
FIG. 15 is a diagram for explaining, on a frequency axis, a sub-carrier signal of a sub-carrier multiplexing system in a digital coherent system used in the optical transmission and reception device according to the second embodiment.

### DESCRIPTION OF EMBODIMENTS

### First Embodiment

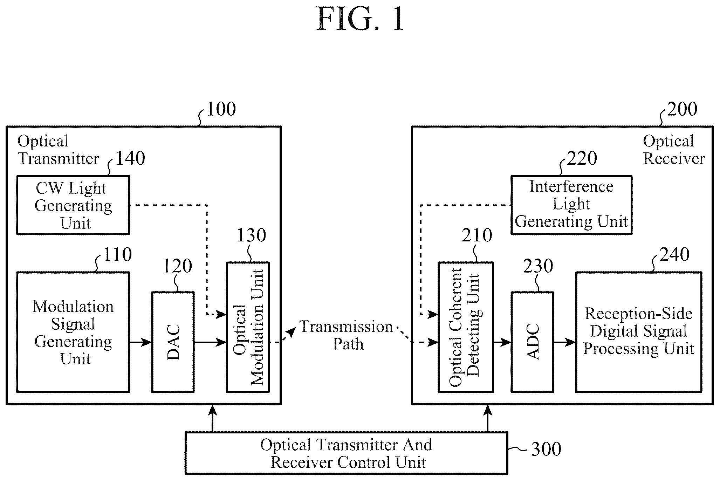

An optical transmission and reception device according to a first embodiment will be described with reference to FIGS. 1 to 12.

In the drawings, a broken line arrow indicates a flow of an optical signal, and a solid line arrow indicates a flow of an electric signal.

The optical transmission and reception device according to the first embodiment is a device focusing on a transmission function and a reception function of a communication device and an optical transceiver that control transmission and reception of optical signals in an optical communication network system using, as a transmission medium, an optical fiber in an optical access and optical core metro network and in an optical communication network system that does not use an optical fiber using, as a transmission medium, a wireless space assuming space, space optical communication, and the like.

The optical transmission and reception device according to the first embodiment is adopted to an optical transmission and reception device that transmits and receives digital coherent signals, which are optical signals using a phase orthogonality such as binary phase shift keying (BPSK), quadrature phase shift keying (QPSK), quadrature amplitude modulation (QAM), or the like having been subject to polarization-multiplexing of a digital coherent system.

Note that it may be adopted to an optical transmission and reception device that transmits and receives single-polarization digital coherent signals not subjected to polarization-multiplexing.

In the following descriptions, in the optical transmission and reception device according to the first embodiment, an optical signal is assumed to be an optical signal having been subject to polarization-multiplexing of the digital coherent system using an X-polarized wave and a Y-polarized wave and in which the X-polarized wave and the Y-polarized wave have been modulated into an I signal and a Q signal of quadrature phases, respectively. For example, the X-polarized wave is a horizontally polarized wave, and the Y-polarized wave is a vertically polarized wave.

A digital coherent signal having been subject to the polarization-multiplexing into an I signal (XI signal) in the X-polarized wave, a Q signal (XQ signal) in the X-polarized wave, an I signal (YI signal) in the Y-polarized wave, and a Q signal (YQ signal) in the Y-polarized wave is assumed.

Note that, while terminals (XI output terminal, XQ output terminal, YI output terminal, and YQ output terminal) for the individual XI signal, XQ signal, YI signal, and YQ signal, and lanes (XI lane, XQ lane, YI lane, and YQ lane) through which electric signals of the individual XI signal, XQ signal, YI signal, and YQ signal flow are distinguished, they are collectively illustrated in the drawings.

As illustrated in FIG. 1, the optical transmission and reception device according to the first embodiment includes an optical transmitter 100, an optical receiver 200, and an optical transmitter and receiver control unit 300.

The optical transmitter 100, the optical receiver 200, and the optical transmitter and receiver control unit 300 are built in the same housing.

The optical transmitter 100 generates modulated light subjected to polarization-multiplexing in which a first pilot symbol signal having a first symbol period and a second pilot symbol signal having a second symbol period different from the first symbol period are inserted into data to be transmitted, and outputs the generated modulated light to an optical receiver of another optical transmission and reception device through a transmission path that is an optical fiber or a wireless space.

In the first embodiment, the modulated light output from the optical transmitter 100 is an optical signal obtained by modulating continuous wave (CW) light having one carrier frequency with a modulation signal that is an electric signal.

The optical receiver 200 receives the polarization-multiplexed modulated light in which the first pilot symbol signal having the first symbol period and the second pilot symbol signal having the second symbol period different from the first symbol period are inserted propagated through a transmission path from an optical transmitter of another optical transmission and reception device, and obtains data from the received modulated light.

The data obtained from the modulated light received by the optical receiver 200 is data demodulated using an analog electric signal obtained by interfering the modulated light that is an optical signal with interference light having one carrier frequency.

The optical transmitter 100 includes a modulation signal generating unit 110, a digital-to-analog converter (hereinafter referred to as DAC) unit 120, an optical modulation unit 130, and a CW light generating unit 140.

The modulation signal generating unit 110 is a transmission-side digital signal processing unit (transmission digital signal processor (DSP)), and will be referred to as a transmission-side DSP 110 hereinafter.

The transmission-side DSP 110 receives, as a digital signal, data as information to be transmitted to a destination, and generates a modulation signal, which is a digital signal for optical modulation in which a first pilot symbol signal having a first symbol period and a second pilot symbol signal having a second symbol period different from the first symbol period are inserted into the input data, that is, the data to be transmitted.

The transmission-side DSP 110 constructs the data to be transmitted into a signal frame format capable of error correction.

The transmission-side DSP 110 generates four modulation signals of an XI signal, an XQ signal, a YI signal, and a YQ signal.

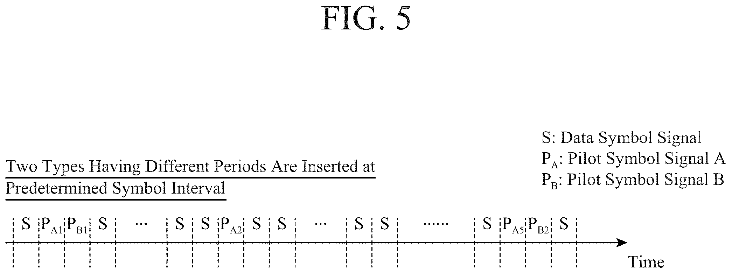

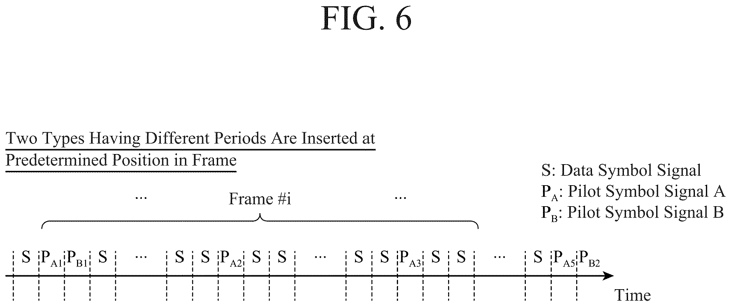

Each of the four modulation signals is a symbol signal sequence in which two types of pilot symbol signals illustrated in FIG. 5 are inserted, or a symbol signal sequence in which two types of pilot symbol signals illustrated in FIG. 6 are inserted.

In FIGS. 5 and 6, the horizontal axis represents time, S represents a data symbol signal, P_{A} (P_{A1}, P_{A2}, ..., P_{A5}, ...) represents a first pilot symbol signal, and P_{B} (P_{B1}, P_{BA2}, ...) represents a second pilot symbol signal.

The data symbol signal S is a symbol signal (complex signal) obtained by converting a bit signal of the data to be transmitted for IQ modulation. The data symbol signal S is what is called a digital coherent signal.

Each of the first pilot symbol signal P_{A} and the second pilot symbol signal P_{B} is 1 bit, that is, a digital coherent signal whose symbol length is 1.

The symbol signal sequence illustrated in FIG. 5 is a symbol signal sequence in which the first pilot symbol signal P_{A} is inserted at a first symbol interval, that is, the first symbol period, with respect to the data symbol signal S instead of the frame unit, and in which the second pilot symbol signal P_{B} is inserted at a second symbol interval different from the first symbol interval, that is, the second symbol period different from the first symbol period, with respect to the data symbol signal S instead of the frame unit.

The second symbol interval of the second pilot symbol signal P_{B} is an integer multiple of equal to or more than two of the first symbol interval of the first pilot symbol signal P_{A}, and is an interval of four times in the present example.

In other words, the second symbol period of the second pilot symbol signal P_{B} is an integer multiple of equal to or more than two of the first symbol period of the first pilot symbol signal P_{A}, and is a period of four times in the present example.

That is, the second pilot symbol signal P_{B} is inserted into the data symbol signal S at a frequency of 1/4 relative to the first pilot symbol signal P_{A}.

The second pilot symbol signal P_{B} is inserted continuously to the first pilot symbol signal P_{A} every second symbol period. That is, the second pilot symbol signal P_{B} is arranged in an adjacent symbol of the first pilot symbol signal P_{A} every second symbol period.

The first pilot symbol signal and the adjacent second pilot symbol signal are arranged at a short time interval, which is one symbol interval in the first embodiment.

The symbol signal sequence illustrated in FIG. 6 is a symbol signal sequence in which the first pilot symbol signal P_{A} is inserted at the first symbol interval determined at a fixed position in the frame unit, that is, the first symbol period, and in which the second pilot symbol signal P_{B} is inserted at the second symbol interval different from the first symbol interval determined at the fixed position in the frame unit, that is, the second symbol period different from the first symbol period.

The second symbol interval of the second pilot symbol signal P_{B} is an integer multiple of equal to or more than two of the first symbol interval of the first pilot symbol signal P_{A}, and is an interval of four times in the present example.

In other words, the second symbol period of the second pilot symbol signal P_{B} is an integer multiple of equal to or more than two of the first symbol period of the first pilot symbol signal P_{A}, and is a period of four times in the present example.

That is, the second pilot symbol signal P_{B} is inserted into the data symbol signal S at a frequency of 1/4 relative to the first pilot symbol signal P_{A}.

The second pilot symbol signal P_{B} is inserted continuously to the first pilot symbol signal P_{A} every second symbol period. That is, the second pilot symbol signal P_{B} is arranged in an adjacent symbol of the first pilot symbol signal P_{A} every second symbol period.

The first pilot symbol signal and the adjacent second pilot symbol signal are arranged at a short time interval, which is one symbol interval in the first embodiment.

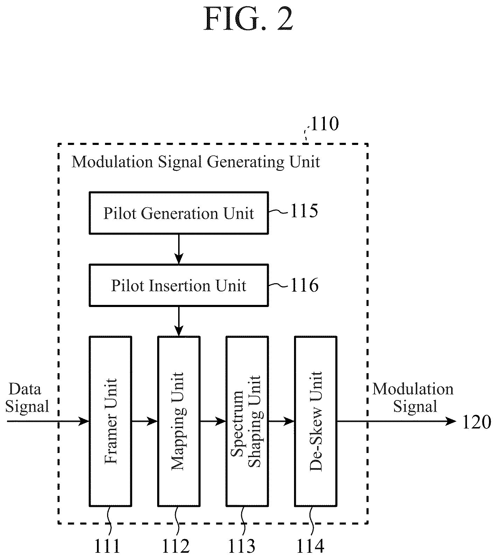

As illustrated in FIG. 2, the transmission-side DSP 110 includes a digital circuit having signal processing functions of a frame generation unit 111, a mapping unit 112, a spectrum shaping unit 113, a skew adjustment unit (de-skew unit) 114, a pilot generation unit 115, and a pilot insertion unit 116.

The frame generation unit 111 is a framer unit that constructs the data to be transmitted into a signal frame format, which is a signal form capable of error correction.

The mapping unit 112 converts a data string based on a bit signal in the digital signal from the frame generation unit 111 into a symbol signal (complex signal) for IQ modulation.

That is, the mapping unit 112 converts the data string based on the data to be transmitted into a modulation signal, which is a digital signal for optical modulation.

In general, as a multi-level degree of the IQ modulation increases, the number of bits allocated to the data symbol signal S increases, and the data rate improves.

The mapping unit 112 includes four output terminals for the XI signal, XQ signal, YI signal, and YQ signal corresponding to a BPSK signal or a QPSK signal subjected to polarization-multiplexing obtained by the mapping unit 112.

Note that the mapping unit 112 includes four output terminals even when the signal subjected to the polarization-multiplexing obtained by the mapping unit 112 is a QAM signal.

In sum, the mapping unit 112 includes four output terminals for digital coherent signals.

Before the mapping unit 112 performs data processing on the data string based on the bit signal in the digital signal from the frame generation unit 111, the pilot insertion unit 116 inserts the first pilot symbol signal P_{A} using the digital coherent signal generated by the pilot generation unit 115 into the data string at every first symbol period.

In addition, before the mapping unit 112 performs data processing on the data string based on the bit signal in the digital signal from the frame generation unit 111, the pilot insertion unit 116 inserts the second pilot symbol signal P_{B} using the digital coherent signal generated by the pilot generation unit 115 into the data string at every second symbol period.

In this case, the mapping unit 112 converts the data string into which the first pilot symbol signal P_{A} and the second pilot symbol signal P_{B} are inserted into a modulation signal based on the symbol signal sequence illustrated in FIG. 5 or the symbol signal sequence illustrated in FIG. 6.

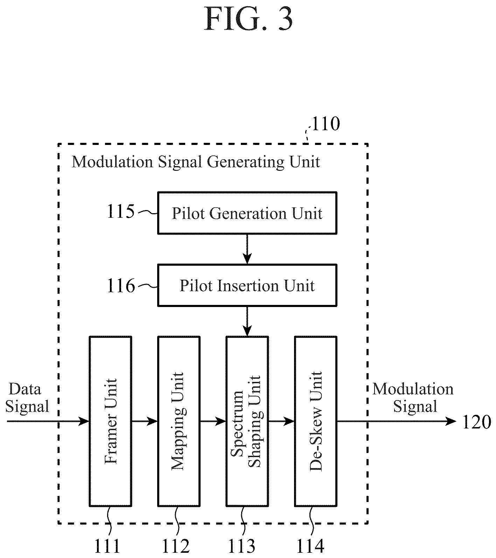

Note that, as illustrated in FIG. 3, the pilot insertion unit 116 may obtain the modulation signal based on the symbol signal sequence illustrated in FIG. 5 or the symbol signal sequence illustrated in FIG. 6 by inserting the first pilot symbol signal P_{A} and the second pilot symbol signal P_{B} using the digital coherent signal generated by the pilot generation unit 115 in the first symbol period and the second symbol period, respectively, in the symbol unit when the data string based on the bit signal in the digital signal from the frame generation unit 111 is converted into the modulation signal by the mapping unit 112.

The spectrum shaping unit 113 shapes frequency characteristics of the modulation signal obtained by the mapping unit 112 depending on the frequency characteristics of the optical transmission and reception device and the frequency characteristics in the transmission path.

The skew adjustment unit 114 compensates for skew (delay difference) that occurs between signals caused by the optical transmitter 100 and generated by the XI lane, XQ lane, YI lane, and YQ lane through which the electric signals of the individual XI signal, XQ signal, YI signal, and YQ signal, which are the modulation signals from the spectrum shaping unit 113, flow.

As described above, the transmission-side DSP 110 constructs the data to be transmitted into a signal frame format with the frame generation unit 111, performs conversion into a modulation signal with the mapping unit 112, forms the modulation signal into a modulation signal in which the first pilot symbol signal P_{A} and the second pilot symbol signal P_{B} based on the digital coherent signal are inserted with the pilot insertion unit 116, and generates a modulation signal, which is a digital signal for optical modulation in which the first pilot symbol signal having the first symbol period and the second pilot symbol signal having the second symbol period different from the first symbol period are inserted, the modulation signal having frequency characteristics shaped by the spectrum shaping unit 113 and skew compensated by the skew adjustment unit 114.

The DAC unit 120 converts the modulation signal including a digital signal into which the first pilot symbol signal P_{A} and the second pilot symbol signal P_{B} are inserted into a modulation signal including an analog signal.

The optical modulation unit 130 modulates the CW light from the CW light generating unit 140 on the basis of the modulation signal converted into the analog signal by the DAC unit 120 to generate modulated light in which the first pilot symbol signal having the first symbol period and the second pilot symbol signal having the second symbol period different from the first symbol period are inserted, and outputs the generated modulated light to the transmission path.

The modulated light is an optical signal that is a digital coherent signal in which information based on the modulation signal is added to the CW light.

The modulated light mixedly includes information based on the XI signal, XQ signal, YI signal, and YQ signal output from independent lanes.

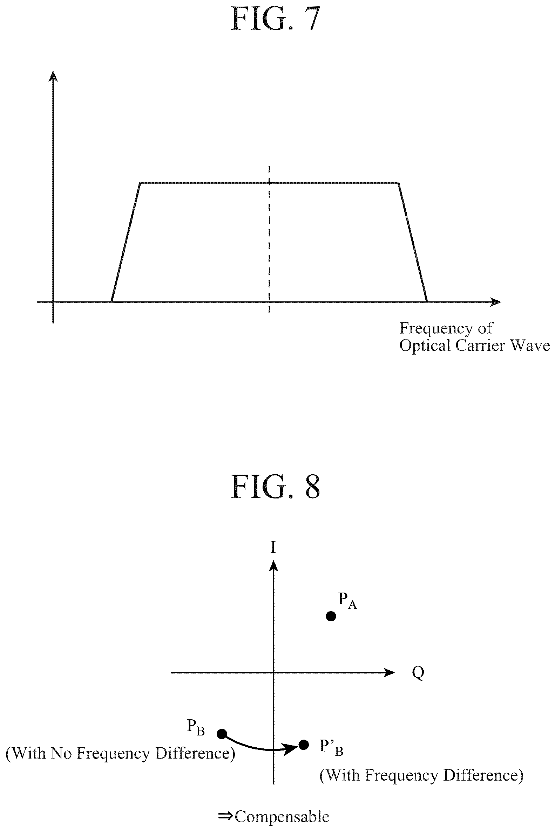

The CW light from the CW light generating unit 140 is a single carrier signal in the digital coherent system as illustrated on a frequency axis in FIG. 7.

As illustrated in FIG. 1, the optical receiver 200 includes an optical coherent detecting unit 210, an interference light generating unit 220, an analog-to-digital converter (ADC) unit 230 serving as an analog-to-digital converter, and a reception-side digital signal processing unit 240.

The reception-side digital signal processing unit 240 is a reception digital signal processor (DSP), and will be referred to as a reception-side DSP 240.

The optical coherent detecting unit 210 receives polarization-multiplexed modulated light transmitted through a transmission path from an optical transmitter of another optical transmission and reception device, causes the receives modulated light to interfere with interference light that is continuous wave (CW) light having a single carrier frequency fc from the interference light generating unit 220, and performs optical coherent detection to output an analog electric signal based on a voltage obtained by photoelectrically converting an optical signal obtained by the interference. The voltage signal output from the optical coherent detecting unit 210 is a single-ended output or a differential output.

In the first embodiment, the analog electric signals output from the optical coherent detecting unit 210 are four signals of an XI signal, an XQ signal, a YI signal, and a YQ signal output from the individual four output terminals.

The XI signal, XQ signal, YI signal, and YQ signal are signals before demodulation, which are analog voltage signals for obtaining a demodulated signal obtained by causing, using the optical coherent detecting unit 210, the polarization-multiplexed modulated light to interfere with the interference light having the single carrier frequency fc.

The ADC unit 230 is an aggregate of ADCs corresponding to individual lanes of the XI lane of the XI signal, the XQ lane of the XQ signal, the YI lane of the YI signal, and the YQ lane of the YQ signal.

Each ADC in the ADC unit 230 samples the input electric signal in the analog domain in each corresponding lane on the basis of the sampling frequency, converts the electric signal into a digital signal that is a discrete signal in the digital domain, and obtains a signal before demodulation including the digital signal.

Each of the XI signal, XQ signal, YI signal, and YQ signal converted into the digital signals by the ADC unit 230 is a signal of a symbol signal sequence in which two types of pilot symbol signals are inserted as illustrated in FIG. 5 or 6.

The reception-side DSP 240 performs digital signal processing on the XI signal, XQ signal, YI signal, and YQ signal converted into digital signals by the ADC unit 230, and performs demodulation.

Note that the reception-side DSP 240 may combine, with the XI signal, XQ signal, YI signal, and YQ signal converted into digital signals by the ADC unit 230, the XI signal and XQ signal for the X-polarized wave to obtain a complex signal in the digital domain for the X-polarized wave, and combine the YI signal and YQ signal for the Y-polarized wave to obtain a complex signal in the digital domain for the Y-polarized wave.

The transmission-side DSP 110 in the optical transmitter 100 generates a modulation signal, whereas the reception-side DSP 240 in the optical receiver 200 demodulates the modulation signal to obtain a demodulated signal.

The reception-side DSP 240 performs, on the input digital signal, compensation for wavelength dispersion, a non-linear optical effect, and polarization mode dispersion received by the modulated light in the transmission path, compensation for a frequency offset caused by a difference in light source frequency of the CW light between the optical transmitter and the optical receiver, and the like.

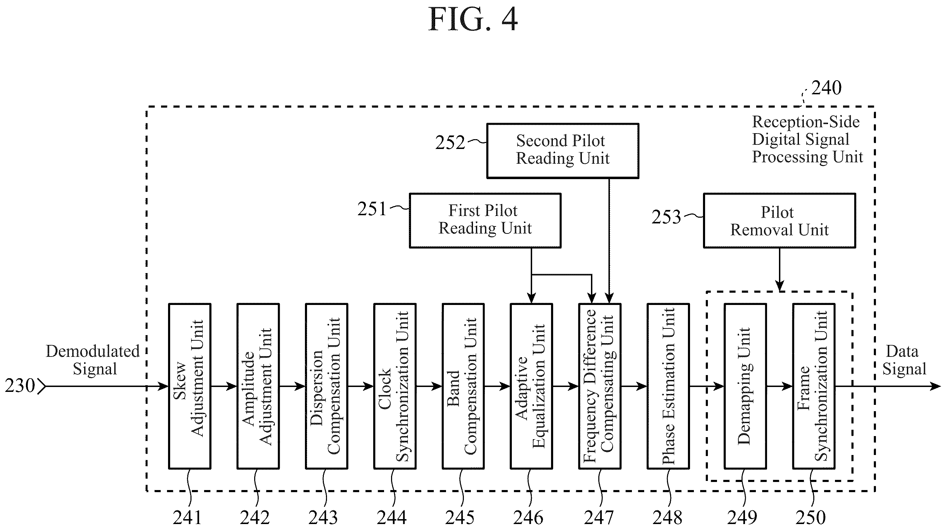

While the reception-side DSP 240 performs the digital signal processing on each of the XI signal, XQ signal, YI signal, and YQ signal, a flow of the digital signal processing is illustrated as a flow of one electric signal in FIG. 4 to avoid complexity of explanations.

In addition, FIG. 4 mainly illustrates an optical demodulation function for detecting the first pilot symbol signal P_{A} and the second pilot symbol signal P_{B} inserted into the polarization-multiplexed modulated light and transmitted from the optical transmitter through the transmission path, which is a characteristic point of the first embodiment, and does not illustrate error correction and the like.

As illustrated in FIG. 4, the reception-side DSP 240 includes a skew adjustment unit 241, an amplitude adjustment unit 242, a dispersion compensation unit 243, a clock synchronization unit 244, a band compensation unit 245, an adaptive equalization unit 246, a frequency difference compensating unit 247, a phase estimation unit 248, a demapping unit 249, a frame synchronization unit 250, a first pilot reading unit 251 that reads the first pilot symbol signal P_{A}, a second pilot reading unit 252 that reads the second pilot symbol signal P_{B}, and a pilot removal unit 253.

Note that each signal of the XI signal, XQ signal, YI signal, and YQ signal before being input to the demapping unit 249 is a signal before demodulation to be subject to signal processing at a stage prior to the demodulation, and a data signal output from the demapping unit 249 is a demodulated signal having been subject to the demodulation signal processing.

In addition, in FIG. 4, the signal input from the ADC unit 230 to the reception-side DSP 240 is a signal before demodulation to be demodulated, but is illustrated as a demodulated signal in a simplified manner.

The skew adjustment unit 241 compensates skew derived from the optical transmitter and the optical receiver of the lane for each of the XI signal, XQ signal, YI signal, and YQ signal.

The amplitude adjustment unit 242 adjusts, as appropriate, a difference in amplitude derived from the optical transmitter and the optical receiver of the lane for each of the XI signal, XQ signal, YI signal, and YQ signal.

The dispersion compensation unit 243 compensates for signal degradation caused by wavelength dispersion that occurs in the transmission path.

The clock synchronization unit 244 compensates for a clock difference between the optical transmitter and the optical receiver. The function of compensating for the clock difference may be implemented by an analog signal before being subject to the digital conversion by the ADC unit 230.

The band compensation unit 245 compensates for degradation of frequency characteristics under a fixed condition.

The adaptive equalization unit 246 adaptively compensates for degradation of frequency characteristics and polarization separation of the X-polarized wave signal (XI signal and XQ signal) and the Y-polarized wave signal (YI signal and YQ signal).

In the adaptive equalization unit 246, in order to determine the compensation condition for the equalization processing, the first pilot symbol signal P_{A} extracted by the first pilot reading unit 251 from the signal of the symbol signal sequence into which the two types of pilot symbol signals are inserted is used.

Since the QPSK signal having a constant IQ amplitude is used for the first pilot symbol signal P_{A} when the quadrature phase modulation such as 16QAM is used for the data symbol signal S, the adaptive equalization unit 246 can determine the compensation condition for the equalization processing.

The skew adjustment unit 241, the amplitude adjustment unit 242, the dispersion compensation unit 243, the clock synchronization unit 244, the band compensation unit 245, and the adaptive equalization unit 246 are configured by those used in a normal digital coherent system.

That is, the signal processing at the stage prior to the demodulation in the reception-side DSP 240 is a common technique in digital signal processing used in the normal digital coherent system.

The frequency difference compensating unit 247 compensates for a difference between the frequency of the CW light from the CW light generating unit 140 in the optical transmitter 100 and the frequency of the interference light from the interference light generating unit 220.

The frequency difference compensating unit 247 detects a position of the first pilot symbol signal P_{A} in the signal of the symbol signal sequence received using the first pilot symbol signal P_{A} extracted by the first pilot reading unit 251 from the signal of the symbol signal sequence into which the two types of pilot symbol signals are inserted.

Since the QPSK signal having a constant IQ amplitude is used for the first pilot symbol signal P_{A} when the quadrature phase modulation such as 16QAM is used for the data symbol signal S, the frequency difference compensating unit 247 can detect the position of the first pilot symbol signal P_{A}.

The frequency difference compensating unit 247 receives the XI signal, XQ signal, YI signal, and YQ signal converted into digital signals by the ADC unit 230, calculates a phase difference of a second pilot symbol signal P_{B}' with respect to the second pilot symbol signal P_{B} from the received digital signals by using the first pilot symbol signal P_{A} extracted by the first pilot reading unit 251, the second pilot symbol signal P_{B}' extracted by the second pilot reading unit 252, and a relative positional relationship between the adjacent first pilot symbol signal P_{A} and second pilot symbol signal P_{B} inserted into the signal of the symbol signal sequence by the transmission-side DSP 110 in the optical transmitter 100, and compensates the frequency of the received digital signals.

The frequency difference compensating unit 247 calculates a frequency difference of the second pilot symbol signal P_{B}' with respect to the second pilot symbol signal P_{B} with reference to the first pilot symbol signal P_{A} by using the first pilot symbol signal P_{A} extracted by the first pilot reading unit 251 from the signal of the symbol signal sequence into which the two types of pilot symbol signals are inserted and the second pilot symbol signal P_{B}' extracted by the second pilot reading unit 252 from the signal of the symbol signal sequence into which the two types of pilot symbol signals are inserted, compensates for the difference between the frequency of the CW light from the CW light generating unit 140 of the optical transmitter 100 and the frequency of the interference light from the interference light generating unit 220, and compensates the frequency of the signal of the symbol signal sequence in the optical receiver 200.

The frequency difference compensating unit 247 estimates the frequency difference of the second pilot symbol signal P_{B}' with respect to the second pilot symbol signal P_{B} with reference to the first pilot symbol signal P_{A} from observed positions of the adjacent first pilot symbol signal P_{A} and the second pilot symbol signal P_{B}' in an IQ signal space, that is, the position indicated by the first pilot symbol signal P_{A} extracted by the first pilot reading unit 251 and the position indicated by the second pilot symbol signal P_{B}', which is adjacent to the first pilot symbol signal P_{A} and extracted by the second pilot reading unit 252, and originally known relative positions of the first pilot symbol signal P_{A} and the second pilot symbol signal P_{B} in the IQ signal space, that is, relative positions of the adjacent first pilot symbol signal P_{A} and second pilot symbol signal P_{B} inserted into the signal of the symbol signal sequence by the transmission-side DSP 110 of the optical transmitter 100 in the IQ signal space.

The phase difference between the adjacent first pilot symbol signal P_{A} and second pilot symbol signal P_{B}' in the received signal of the symbol signal sequence is analyzed using the estimated frequency difference in the second pilot symbol signal P_{B}', and the frequency of the received signal of the symbol signal sequence is compensated using the calculated compensation amount.

Since the adjacent first pilot symbol signal P_{A} and second pilot symbol signal P_{B} are inserted at a short time interval, (symbol interval), the phase rotation with respect to the time interval can be reduced. As a result, a phase rotation amount can be accurately read, and the frequency difference compensating unit 247 can compensate for an accurate difference in optical frequency.

This point will be described with reference to FIG. 8.

FIG. 8 illustrates an IQ signal space in which the horizontal axis represents a Q-axis and the vertical axis represents an I-axis.

P_{A} represents a signal point in the first pilot symbol signal P_{A}, P_{B} represents a signal point in the second pilot symbol signal P_{B} when there is no frequency difference, and P_{B}' represents a signal point in the second pilot symbol signal P_{B} when there is a frequency difference.

In FIG. 8, the signal point P_{A} is an observed signal point indicated by the first pilot symbol signal P_{A} extracted by the first pilot reading unit 251, and serves as a reference point for analyzing a phase difference.

The signal point P_{B} is a signal point with no frequency difference from the signal point P_{A}, that is, a signal point obtained from the relative positions in the IQ signal space of the adjacent first pilot symbol signal P_{A} and second pilot symbol signal P_{B} inserted into the signal of the symbol signal sequence by the transmission-side DSP 110 of the optical transmitter 100.

The signal point P_{B}' is an observed signal point indicated by the second pilot symbol signal P_{B} extracted by the second pilot reading unit 252.

The signal point P_{A} and the signal point P_{B} (with no difference) indicate a relative positional relationship in the IQ signal space with reference to the signal point P_{A} based on the elapse of one symbol period in the symbol signal sequence by the transmission-side DSP 110.

The signal point P_{A} and the signal point P_{B}' (with a difference) indicate a relative positional relationship of the signal point P_{B}' with respect to the observed signal point with reference to the signal point P_{A} in the IQ signal space.

The signal point P_{A} and the signal point P_{B}' (with a difference), and the signal point P_{A} and the signal point P_{B} (with no difference) indicate a relative positional relationship in the IQ signal space.

Thus, it is possible to observe how much the phase difference from the signal point P_{B}' with reference to the signal point P_{A} deviates from the original phase angle (known value: signal point P_{B}) due to the frequency difference (phase rotation amount in unit time).

The phase difference of the signal point P_{B} and the signal point P_{B}' with reference to the signal point P_{A} is calculated by extracting a phase term from a value of a complex number output by multiplication processing using complex conjugation when the two points are represented by complex numbers in the complex plane.

That is, assuming that there is no difference in frequency between the modulated light 100 from the optical transmitter and the modulated light received by the optical receiver 200 with respect to the originally known relative positions of the first pilot symbol signal P_{A} and the second pilot symbol signal P_{B} in the IQ signal space, FIG. 8 illustrates an exemplary relative position in the IQ signal space with respect to the signal point P_{B} indicated by the second pilot symbol signal P_{B} with reference to the signal point P_{A} indicated by the first pilot symbol signal P_{A} extracted by the first pilot reading unit 251.

In addition, FIG. 8 illustrates an exemplary relative position in the IQ signal space with respect to the signal point P_{B}' indicated by the second pilot symbol signal P_{B} extracted by the second pilot reading unit 252 with reference to the signal point P_{A} indicated by the first pilot symbol signal P_{A} extracted by the first pilot reading unit 251.

Since the second pilot symbol signal P_{B} is arranged adjacent to the first pilot symbol signal P_{A}, that is, arranged in an adjacent symbol at a short time interval in the first embodiment, according to the signal point P_{B}' indicated by the second pilot symbol signal P_{B} extracted by the second pilot reading unit 252, the phase rotation with respect to the time interval can be reduced. As a result, the phase rotation amount can be accurately read.

In this manner, the frequency difference compensating unit 247 obtains the frequency difference (phase rotation amount in unit time) from the phase shifting in the sampling time between the first pilot symbol signal P_{A} and the second pilot symbol signal P_{B} with respect to the signal point P_{B} at the signal point P_{B}'.

The frequency difference compensating unit 247 generates a sine wave (digital data) having a unit amplitude that gives a reverse phase in the sampling time to cancel the obtained frequency difference, and multiplies the signal of the symbol signal sequence by the generated sine wave.

As a result, the frequency difference compensating unit 247 compensates for the difference in optical frequency between the optical transmitter 100 and the optical receiver 200, that is, the difference between the frequency of the CW light from the CW light generating unit 140 of the optical transmitter 100 and the frequency of the interference light from the interference light generating unit 220.

That is, with reference to the first pilot symbol signal P_{A} extracted by the first pilot reading unit 251, the frequency difference between the second pilot symbol signal P_{B} extracted by the second pilot reading unit 252 and adjacent to the extracted first pilot symbol signal P_{A} and the second pilot symbol signal P_{B} inserted into the signal of the symbol signal sequence by the transmission-side DSP 110 and adjacent to the extracted first pilot symbol signal P_{A} can be analyzed from the position in the IQ signal space indicated by the first pilot symbol signal P_{A} extracted by the first pilot reading unit 251, the position in the IQ signal space indicated by the second pilot symbol signal P_{B} extracted by the second pilot reading unit 252 and adjacent to the extracted first pilot symbol signal P_{A}, and the relative positions in the IQ signal space of the adjacent first pilot symbol signal P_{A} and second pilot symbol signal P_{B} inserted into the signal of the symbol signal sequence by the transmission-side DSP 110 of the optical transmitter.

As a result, by using the frequency difference as the analysis result described above, the frequency difference compensating unit 247 can compensate the frequency of the signal of the symbol signal sequence in the optical receiver 200.

The frequency compensation by the first pilot symbol signal P_{A} and the second pilot symbol signal P_{B} is as described above, and a technique of frequency compensation using two pilot symbol signals known between the transmission side and the reception side can be commonly used.

Since the optical receiver 200 compensates the frequency of the signal of the symbol signal sequence by using the first pilot symbol signal P_{A} and the second pilot symbol signal P_{B} adjacent to the extracted first pilot symbol signal P_{A}, that is, two pilot symbol signals having a short time interval of the symbol interval, the phase rotation of the second pilot symbol signal P_{B} due to the frequency deviation with respect to the first pilot symbol signal P_{A} is small, whereby an accurate phase rotation amount in the second pilot symbol signal P_{B} with reference to the first pilot symbol signal P_{A} can be obtained.

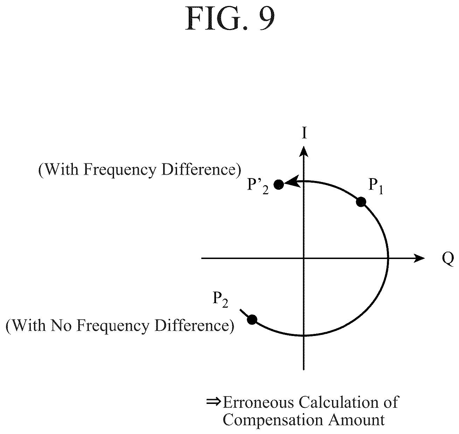

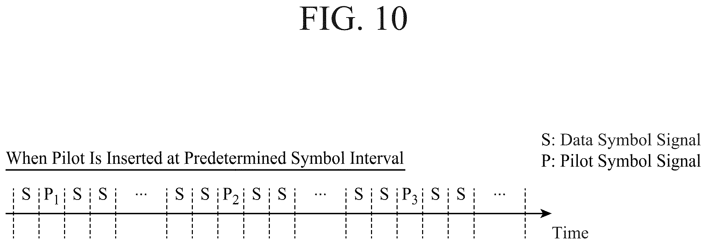

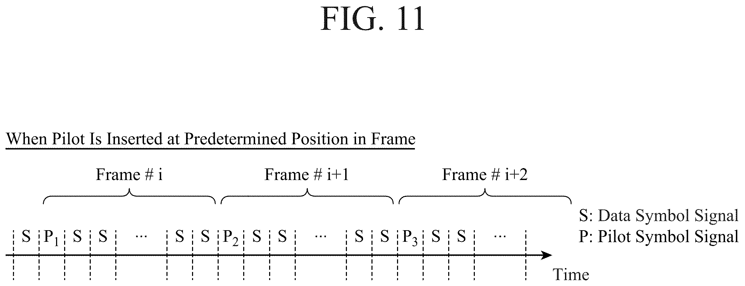

For example, a problem may occur as illustrated in FIG. 9 when the optical receiver compensates the frequency of the modulated light based on the symbol signal sequence in which the pilot symbol signal P is inserted into the data symbol signal S at the symbol interval instead of the frame unit illustrated in FIG. 10 or based on the symbol signal sequence in which the pilot symbol signal P is inserted at the symbol interval determined at the position in the frame unit illustrated in FIG. 11 in the optical transmitter without using the second pilot symbol signal P_{B} according to the first embodiment.

FIG. 9 illustrates an IQ signal space in which the horizontal axis represents a Q-axis and the vertical axis represents an I-axis.

P₁ represents a signal point in the first pilot symbol signal P₁ for performing frequency compensation, P₂ represents a signal point in the second pilot symbol signal P₂ when there is no frequency difference, and P₂' represents a signal point in the second pilot symbol signal P₂ when there is a frequency difference.

In FIG. 9, the signal point P₁ is an observed signal point indicated by the first pilot symbol signal P₁ extracted by the pilot reading unit in the optical receiver, and serves as a reference point for analyzing a phase difference.

The signal point P₂ is a signal point with no frequency difference from the signal point P₁, that is, a signal point obtained from the relative positions in the IQ signal space of the adjacent first pilot symbol signal P₁ and second pilot symbol signal P₂ inserted into the signal of the symbol signal sequence in the optical transmitter.

The signal point P₂' is an observed signal point indicated by the second pilot symbol signal P₂ extracted by the pilot reading unit.

As understood from FIG. 9, when the time interval from the time at which the first pilot symbol signal P₁ is extracted until the time at which the second pilot symbol signal P₂ is extracted is longer and there is a difference in the frequency of the optical carrier wave of the interference light in the optical receiver 200 with respect to the frequency of the optical carrier wave from the optical transmitter, a large phase rotation occurs at the signal point P₂' in the second pilot symbol signal P₂ from the first pilot symbol signal P₁ due to the lapse of the long time.

That is, the phase rotation of the second pilot symbol signal P₂ due to the frequency deviation with respect to the first pilot symbol signal P₁ is larger, the phase rotation in the IQ signal space occurs, and the phase rotates cyclically, whereby an error occurs in estimating the phase rotation amount.

In the optical transmission and reception device according to the first embodiment, the first pilot symbol signal P_{A} and the second pilot symbol signal P_{B} adjacent to the extracted first pilot symbol signal P_{A} are used, whereby the phase rotation of the second pilot symbol signal P_{B} due to the frequency deviation with respect to the first pilot symbol signal P_{A} is smaller, and an accurate phase rotation amount can be obtained without an error in estimation of the phase rotation amount.

In sum, the optical transmission and reception device according to the first embodiment inserts the first pilot symbol signal P_{A} and second pilot symbol signal P_{B} having different symbol periods into the signal of the symbol signal sequence, and compensates for the frequency different between the optical carrier wave in the optical transmitter 100 and the frequency of the interference light in the optical receiver 200 from the first pilot symbol signal P_{A} and the second pilot symbol signal P_{B} consecutive every second symbol period of the second pilot symbol signal P_{B}.

Thus, the optical transmission and reception device according to the first embodiment can accurately calculate the phase rotation amount calculated from the information regarding the signal points P_{A}, P_{B}, and P_{B}' of the first pilot symbol signal P_{A} and the second pilot symbol signal P_{B} in the IQ signal space, and eventually the compensation amount for the waveform distortion caused by the calculated phase rotation amount (frequency difference), using the first pilot symbol signal P_{A} and the second pilot symbol signal P_{B} at a short time interval.

As a result, the signal quality of reception signals in the optical receiver 200 can be improved, and eventually, a range of the compensation for the frequency difference between the optical carrier wave in the optical transmitter 100 and the frequency of the interference light in the optical receiver 200 can be extended.

Thus, the optical transmission and reception device according to the first embodiment can compensate for degrading factors due to the waveform distortion caused by the frequency difference between the optical carrier wave in the optical transmitter 100 and the frequency of the interference light in the optical receiver 200 and the like with respect to a digital coherent signal of a low-to-medium speed.

Note that, in estimating the frequency difference of the modulated light, the compensation amount may be calculated after averaging processing is performed on the observed positions of the adjacent first pilot symbol signal P_{A} and second pilot symbol signal P_{B} in the IQ signal space and relative positions of the adjacent first pilot symbol signal P_{A} and second pilot symbol signal P_{B} in the optical transmitter 100.

By performing the averaging processing, the speed responsiveness can be optionally adjusted.

The phase estimation unit 248 compensates for phase variation of a light source included in the CW light generating unit 140 and the interference light generating unit 220.

The phase estimation unit 248 is configured by one used in a normal digital coherent system.

That is, signal processing for demodulation in the reception-side DSP 240 other than the compensation for the frequency difference by the frequency difference compensating unit 247 uses a common technique in digital signal processing used in the normal digital coherent system.

After the pilot removal unit 253 removes the first pilot symbol signal P_{A} and the second pilot symbol signal P_{B}, the demapping unit 249 converts the symbol signal whose waveform distortion has been compensated into a bit signal.

The frame synchronization unit 250 synchronizes frames from the bit signal sequence.

The digital signal of the bit signal sequence in which the frames are synchronized is then subject to error correction.

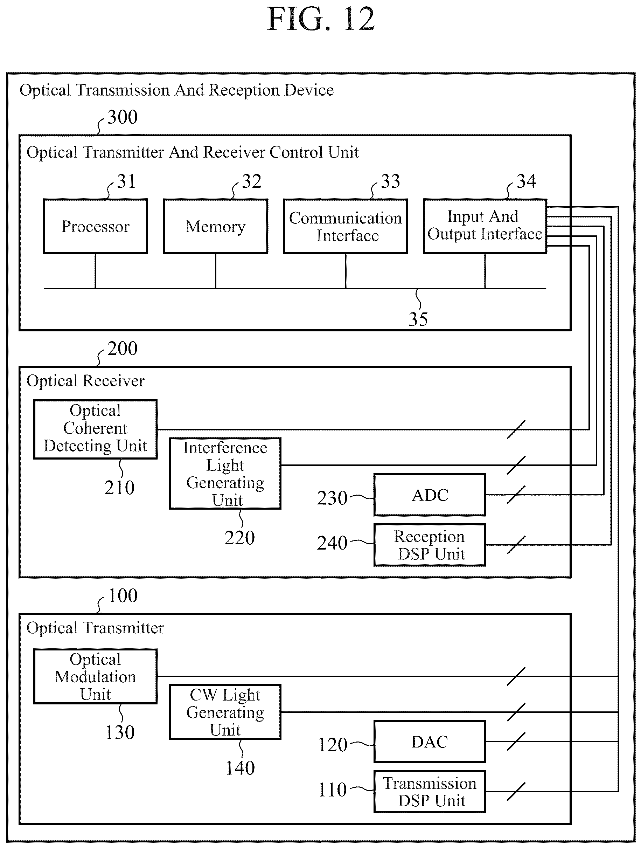

Next, a hardware configuration of the optical transmission and reception device according to the first embodiment will be described with reference to FIG. 12.

In FIG. 12, reference signs same as those in FIGS. 1 to 4 denote the same or equivalent parts.

The optical transmitter and receiver control unit 300 includes a processor 31 such as a central processing unit (CPU) or a system large scale integration (LSI), a memory 32 including a random access memory (RAM), a read only memory (ROM), and the like, a communication interface 33, and an input and output interface 34.

The processor 31, the memory 32, the communication interface 33, and the input and output interface 34 are connected to a bus 35, and mutually exchange data, control signals, and the like via the bus 35.

The processor 31 temporarily reads a program recorded in the ROM of the memory 32 into the RAM of the memory 32, and executes processing by the read program.

The ROM of the memory 32 stores various types of data, programs for executing processing in the optical transmitter 100 and the optical receiver 200, processing programs required to start the optical transmitter and receiver control unit 300, and the like.

The communication interface 33 is used to exchange data and control signals with each component of the optical transmitter 100, each component of the optical receiver 200, and each component of another optical transmission and reception device.

The input and output interface 34 exchanges control signals and modulation signals with each component of the optical transmitter 100 and each component of the optical receiver 200 via electric wiring.

The input and output interface 34 is, for example, an interface for supplying, to the interference light generating unit 220, an injection current to a light source included in the interference light generating unit 220 for generating light with respect to the interference light generating unit 220.

In addition, the input and output interface 34 is, for example, an interface for outputting various control signals to the transmission-side DSP unit 110 and the reception-side DSP unit.

As described above, in the optical transmission and reception device according to the first embodiment, the optical transmitter 100 includes the modulation signal generating unit 110 that generates a modulation signal in which the first pilot symbol signal P_{A} having the first symbol period and the second pilot symbol signal P_{B} having the second symbol period different from the first symbol period are inserted into the data to be transmitted, and the optical modulation unit 130 that generates modulated light into which the first pilot symbol signal P_{A} having the first symbol period and the second pilot symbol signal P_{B} having the second symbol period are inserted on the basis of the modulation signal converted into the analog signal by the digital-to-analog conversion unit 120, and the optical receiver 200 includes the optical coherent detecting unit 210 that coherently detects the polarization-multiplexed modulated light and into which the first pilot symbol signal P_{A} having the first symbol period and the second pilot symbol signal P_{B} having the second symbol period different from the first symbol period are inserted and outputs an analog electric signal, and the reception-side digital signal processing unit 240 including the frequency difference compensating unit 247 that calculates a phase difference using the first pilot symbol signal P_{A} and the second pilot symbol signal P_{B} adjacent to the first pilot symbol signal P_{A}, which are inserted into the received polarization-multiplexed modulated light and extracted from the digital signal obtained in such a manner that the analog-to-digital conversion unit 230 digitally converts the analog electric signal obtained by coherently detecting the modulated light, and compensates the frequency of the received digital signal, whereby the difference between the frequency of the modulated light from the optical transmitter 100 and the frequency of the modulated light received by the optical receiver 200 can be compensated.

As a result, degrading factors of the waveform distortion caused by the difference in frequency between transmission and reception can be compensated for, the signal quality of reception signals in the optical receiver 200 can be improved, and eventually, the range of the compensation for the difference in optical frequency between the optical transmitter 100 and the optical receiver 200 can be extended.

In particular, it is effective in the optical receiver 200 that handles digital coherent signals of a low-to-medium speed.

### Second Embodiment

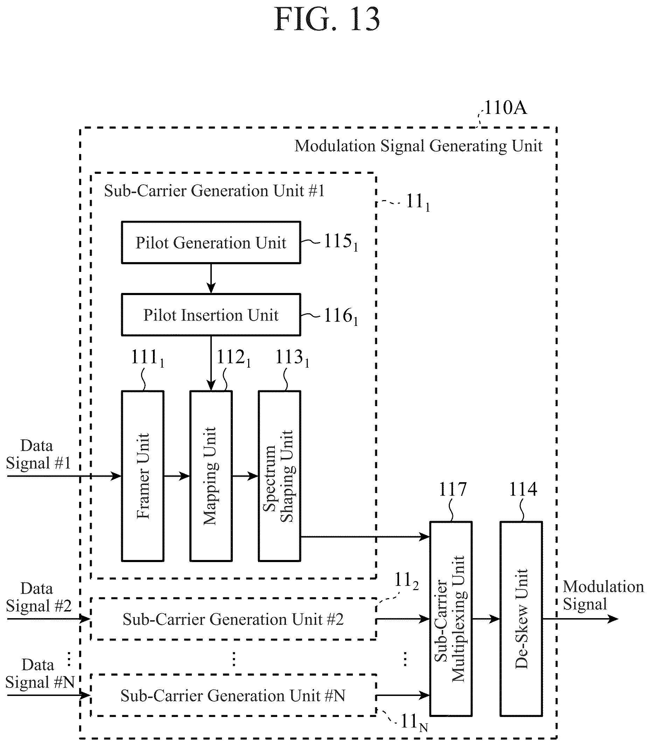

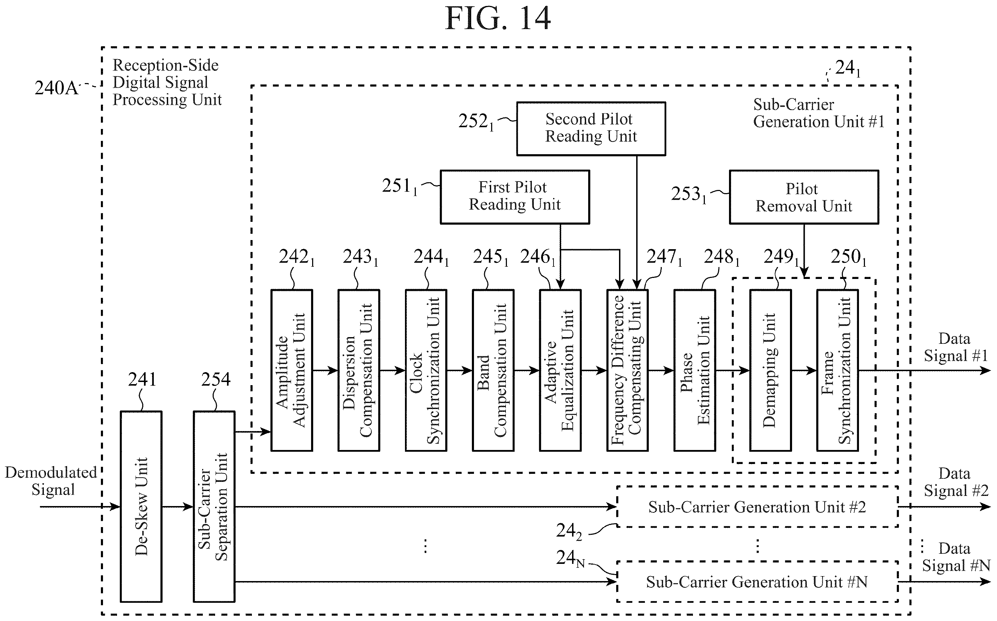

An optical transmission and reception device according to a second embodiment will be described with reference to FIGS. 13 to 15.

The optical transmission and reception device according to the first embodiment uses, as an optical carrier wave, a single carrier signal in the digital coherent system illustrated on the frequency axis in FIG. 7.

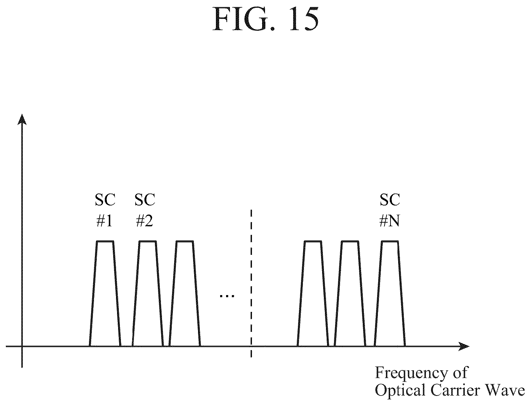

Meanwhile, the optical transmission and reception device according to the second embodiment is an optical transmission and reception device based on a subcarrier multiplexing system using, as an optical subcarrier, each of N sub-carrier signals of different frequency arrangements in a digital coherent system illustrated on a frequency axis in FIG. 15.

The basic idea of the optical transmission and reception device according to the second embodiment is to adopt the N sub-carrier signals as the optical subcarriers to the optical transmission and reception device according to the first embodiment.

Thus, hereinafter, differences from the optical transmission and reception device according to the first embodiment will be mainly described.

In the second embodiment, as illustrated in FIG. 15, an optical transmission and reception device, which transmits and receives an optical signal in which N channels of N sub-carrier signals SC#1 to SC#N having different frequencies of X-polarized waves and N channels of N sub-carrier signals SC#1 to SC#N having different frequencies of Y-polarized waves are multiplexed, is assumed as an example.

In an optical receiver 200, an optical coherent detecting unit 210 collectively receives modulated light polarization-multiplexed into each of the N sub-carrier signals of different frequency arrangements in a band in which a signal is detectable, and the modulated light collectively received by the optical coherent detecting unit 210 is subject to optical coherent detection and is output as analog electric signals.

The analog electric signals collectively processed are converted into digital signals by an ADC unit 230, and are input to a reception-side DSP 240.

In the reception-side DSP 240, separation is carried out for each of the subcarrier signals SC#1 to SC#N, and demodulation is carried out for each channel of the sub-carrier signals SC#1 to SC#N.

As illustrated in FIG. 1, the optical transmission and reception device according to the second embodiment includes an optical transmitter 100, an optical receiver 200, and an optical transmitter and receiver control unit 300 in a similar manner to the optical transmission and reception device according to the first embodiment.

The optical transmitter 100 includes a transmission-side DSP 110A, a DAC unit 120, an optical modulation unit 130, and a CW light generating unit 140.

As illustrated in FIG. 13, the transmission-side DSP 110A includes N subcarrier generation units 11₁ to 11_{N}, a sub-carrier multiplexing unit 117, and a skew adjustment unit (de-skew unit) 114.

The N sub-carrier generation units 11₁ to 11_{N} receive inputs of different data signals #1 to #N serving as information to be transmitted to a destination, respectively, as digital signals, and generate modulation signals that are digital signals for optical modulation in which a first pilot symbol signal having a first symbol period and a second pilot symbol signal having a second symbol period different from the first symbol period are inserted into the data #1 to #N to be transmitted.

Each of the N sub-carrier generation units 11₁ to 11_{N} has basically the same configuration while the data #1 to #N to be transmitted and the sub-carrier signals SC#1 to SC#N as carrier waves are different.

That is, each of the N sub-carrier generation units 11₁ to 11_{N} includes a digital circuit having signal processing functions of frame generation units 111₁ to 111_{N}, mapping units 112₁ to 112_{N}, spectrum shaping units 113₁ to 113_{N}, pilot generation units 115₁ to 115_{N}, and pilot insertion units 116₁ to 116_{N}, and basically has the same configuration as the frame generation unit 111, the mapping unit 112, the spectrum shaping unit 113, the pilot generation unit 115, and the pilot insertion unit 116 of the transmission-side DSP 110 of 110 of the optical transmitter in the optical transmission and reception device according to the first embodiment.

In sum, each of the N sub-carrier generation units 11₁ to 11_{N} constructs the data to be transmitted into a signal frame format based on the digital coherent signal with the frame generation units 111₁ to 111_{N}, converts the data into an XI signal, XQ signal, YI signal, and YQ signal corresponding to a QPSK signal subjected to polarization-multiplexing on the frequency axis by the sub-carrier signals SC#1 to SC#N with the mapping unit 112, forms a modulation signal into which the first pilot symbol signal P_{A} and the second pilot symbol signal P_{B} by the digital coherent signal are inserted with the pilot insertion units 116₁ to 116_{N}, and shapes the frequency characteristics of the modulation signal with the spectrum shaping unit 113.

Each of the N sub-carrier generation units 11₁ to 11_{N} has four output terminals.

The sub-carrier multiplexing unit 117 performs signal multiplexing on the modulation signals from the N sub-carrier generation units 11₁ to 11_{N} on the frequency axis.

The skew adjustment unit 114 compensates for skew (delay difference) that occurs between signals caused by the optical transmitter 100 and generated by an XI lane, XQ lane, YI lane, and YQ lane through which the electric signals of the individual XI signal, XQ signal, YI signal, and YQ signal, which are multiplexed modulation signals on the frequency axis from the spectrum shaping unit 113, flow.

The multiplexed modulation signals on the different frequency axes generated in this manner are converted into analog signals by the DAC unit 120.

The optical modulation unit 130 modulates the CW light from the CW light generating unit 140 on the basis of the modulation signal converted into the analog signal by the DAC unit 120, generates polarization-multiplexed modulated light frequency-multiplexed by a plurality of different sub-carrier signals into which the first pilot symbol having the first symbol period and the second pilot symbol having the second symbol period different from the first symbol period are inserted, and outputs the generated modulated light to a transmission path.

The optical receiver 200 includes the optical coherent detecting unit 210, an interference light generating unit 220, the ADC unit 230, and a reception-side DSP 240A.

The optical coherent detecting unit 210 performs optical coherent detection in which the polarization-multiplexed modulated light frequency-multiplexed by a plurality of different sub-carrier signals into which the first pilot symbol signal P_{A} having the first symbol period and the second pilot symbol signal P_{B} having the second symbol period different from the first symbol period are inserted is collectively received, the received modulated light is caused to interfere with interference light that is CW light having a single carrier frequency fc from the interference light generating unit 220, and an analog electric signal based on a voltage obtained by photoelectrically converting the optical signal obtained by the interference is output.

The ADC unit 230 samples the electric signal in the analog domain from the optical coherent detecting unit 210 on the basis of the sampling frequency, converts the electric signal into a digital signal that is a discrete signal in the digital domain, and obtains a signal before demodulation including the digital signal for obtaining a demodulated signal.

The reception-side DSP 240A includes a skew adjustment unit (de-skew unit) 241, a sub-carrier separation unit 254, and N sub-carrier detection units 24₁ to 24_{N}.

The skew adjustment unit 241 compensates skew derived from the optical transmitter and the optical receiver of the lane for each of the XI signal, XQ signal, YI signal, and YQ signal.

The sub-carrier separation unit 254 performs signal separation on the signal before demodulation including the polarization-multiplexed digital signal frequency-multiplexed by the plurality of different sub-carrier signals into which the first pilot symbol signal P_{A} and the second pilot symbol signal P_{B} are inserted on the frequency axis to correspond to the N sub-carrier signals SC#1 to SC#N.

The individual N sub-carrier detection units 24₁ to 24_{N} perform, on the individual N digital signals separated by the sub-carrier separation unit 254, compensation for wavelength dispersion, a non-linear optical effect, and polarization mode dispersion received by the modulated light in the transmission path, compensation for a frequency offset caused by a difference in light source frequency of the CW light between the optical transmitter and the optical receiver, and the like.

The individual N sub-carrier detection units 24₁ to 24_{N} include amplitude adjustment units 242₁ to 242_{N}, dispersion compensation units 243₁ to 243_{N}, clock synchronization units 244₁ to 244_{N}, band compensation units 245₁ to 245_{N}, adaptive equalization units 246₁ to 246_{N}, frequency difference compensating units 247₁ to 247_{N}, phase estimation units 248₁ to 248_{N}, demapping units 249₁ to 249_{N}, frame synchronization units 250₁ to 250_{N}, first pilot reading units 251₁ to 251_{N} that read the first pilot symbol signal P_{A}, second pilot reading units 252₁ to 252_{N} that read the second pilot symbol signal P_{B}, and pilot removal units 253₁ to 253_{N}, which have basically the same configuration as the amplitude adjustment unit 242, the dispersion compensation unit 243, the clock synchronization unit 244, the band compensation unit 245, the adaptive equalization unit 246, the frequency difference compensating unit 247, the phase estimation unit 248, the demapping unit 249, the frame synchronization unit 250, the first pilot reading unit 251, the second pilot reading unit 252, and the pilot removal unit 253 in the reception-side DSP 240 of the optical receiver 200 in the optical transmission and reception device according to the first embodiment.

In sum, in each of the N sub-carrier detection units 24₁ to 24_{N}, digital processing similar to that of the reception-side DSP 240 in the optical transmission and reception device according to the first embodiment is performed.

The frequency difference compensating units 247₁ to 247_{N} in the individual N sub-carrier detection units 24₁ to 24_{N} compensate for the difference between the frequency of the CW light from the CW light generating unit 140 in the optical transmitter 100 and the frequency of the interference light from the interference light generating unit 220 for the individual sub-carrier signals SC#1 to SC#N.

N data signals are output from the reception-side DSP 240A by the N subcarrier detection units 24₁ to 24_{N} included in the reception-side DSP 240A.

In a similar manner to the hardware configuration of the optical transmission and reception device according to the first embodiment, as a hardware configuration of the optical transmission and reception device according to the second embodiment, a receiver control unit 30 includes a processor 31 such as a CPU or a system LSI, a memory 32 including a RAM, a ROM, and the like, a communication interface 33, and an input and output interface 34.

As described above, according to the optical transmission and reception device according to the second embodiment, in the optical transmission and reception device in which the optical transmitter 100 outputs modulated light frequency-multiplexed by the sub-carrier signals SC#1 to SC#N as the N optical subcarriers and the optical receiver 200 collectively receives the polarization-multiplexed modulated light frequency-multiplexed by the N sub-carrier signals SC#1 to SC#N on the frequency axis, for each of the sub-carrier signals SC#1 to SC#N, the difference between the frequency of the optical carrier wave from the optical transmitter 100 and the frequency of the optical carrier wave of the interference light in the optical receiver 200 can be compensated in a similar manner to the optical transmission and reception device according to the first embodiment.

Note that the individual embodiments , can be freely combined, any constituent element of each embodiment can be modified, and any constituent element of each embodiment can be omitted.

### INDUSTRIAL APPLICABILITY

The optical transmission and reception device according to the present disclosure can be adopted not only to a communication system using, as a transmission medium, an optical fiber in an optical access and optical core metro network but also to an optical communication system not using an optical fiber such as space, space optical communication, or the like.

### REFERENCE SIGNS LIST

100: Optical transmitter, 110, 110A: Modulation signal generating unit (Transmission-side DSP), 11₁ to 11_{N}: Sub-carrier generation unit, 111, 111₁ to 111_{N} Frame generation unit (Framer unit), 112, 112₁ to 112_{N}: Mapping unit, 113, 113₁ to 113_{N}: Spectrum shaping unit, 114: Skew adjustment unit (De-skew unit), 115, 115₁ to 115_{N}: Pilot generation unit, 116, 116₁ to 116_{N}: Pilot insertion unit, 117: Subcarrier multiplexing unit, 120: Digital-to-analog conversion (DAC) unit, 130: Optical modulation unit, 140: CW light generating unit, 200: Optical receiver, 210: Optical coherent detecting unit, 220: Interference light generating unit, 230: ADC unit, 240, 240A: Reception-side digital signal processing unit (Reception-side DSP), 24₁ to 24_{N}: Sub-carrier detection unit, 241: Skew adjustment unit, 242, 242₁ to 242_{N}: Amplitude adjustment unit, 243, 243₁ to 243_{N}: Dispersion compensation unit, 244, 244₁ to 244_{N}: Clock synchronization unit, 245, 245₁ to 245_{N}: Band compensation unit, 246, 246₁ to 246_{N}: Adaptive equalization unit, 247, 247₁ to 247_{N}: Frequency difference compensating unit, 248, 248₁ to 248_{N}: Phase estimation unit, 249, 249₁ to 249_{N}: Demapping unit, 250, 250₁ to 250_{N}: Frame synchronization unit, 251, 251₁ to 251_{N}: First pilot reading unit, 252, 252₁ to 252_{N}: Second pilot reading unit, 253, 253₁ to 253_{N}: Pilot removal unit

## Claims

1. An optical transmission and reception device comprising:
an optical transmitter; and
an optical receiver, wherein
the optical transmitter includes:
a modulation signal generating unit to generate a modulation signal that is a digital signal for optical modulation in which a first pilot symbol signal having a first symbol period and a second pilot symbol signal having a second symbol period different from the first symbol period are inserted into data to be transmitted;
a digital-to-analog conversion unit to convert the modulation signal that is the digital signal generated by the modulation signal generating unit into a modulation signal including an analog signal; and
an optical modulation unit to generate modulated light into which the first pilot symbol signal having the first symbol period and the second pilot symbol signal having the second symbol period are inserted by modulating CW light from a CW light generating unit on a basis of the modulation signal converted into the analog signal by the digital-to-analog conversion unit, and
the optical receiver includes:
an optical coherent detecting unit to receive polarization-multiplexed modulated light into which the first pilot symbol signal having the first symbol period and the second pilot symbol signal having the second symbol period different from the first symbol period are inserted, coherently detect the received modulated light, and output an analog electric signal;
an analog-to-digital conversion unit to perform analog-to digital conversion on the analog electric signal from the optical coherent detecting unit to output the signal as a digital signal; and
a reception-side digital signal processing unit including a frequency difference compensating unit to receive the digital signal from the analog-to-digital conversion unit, calculate a phase difference using the first pilot symbol signal having the first symbol period and the second pilot symbol signal having the second symbol period different from the first symbol period and adjacent to the first pilot symbol signal, the first pilot symbol signal and the second pilot symbol signal being inserted into the received polarization-multiplexed modulated light extracted from the received digital signal, and compensate a frequency of the received digital signal.

2. The optical transmission and reception device according to claim 1, wherein
the optical modulation unit generates the modulated light using a single carrier signal as an optical carrier wave,
the optical coherent detecting unit converts the modulated light using the single carrier signal as the optical carrier wave into the analog electric signal, and
the frequency difference compensating unit in the reception-side digital signal processing unit compensates the frequency of the digital signal for the single carrier signal.

3. The optical transmission and reception device according to claim 1, wherein
the optical modulation unit generates the modulated light frequency-multiplexed using, as an optical subcarrier, a plurality of sub-carrier signals of different frequency arrangements,
the optical coherent detecting unit converts the modulated light frequency-multiplexed using, as the optical subcarrier, the plurality of sub-carrier signals of the different frequency arrangements into the analog electric signal, and
the frequency difference compensating unit in the reception-side digital signal processing unit compensates the frequency of the digital signal for each of the plurality of sub-carrier signals of the different frequency arrangements.

4. The optical transmission and reception device according to any one of claims 1 to 3, wherein
the modulated light generated by the optical modulation unit includes an optical signal in which an X-polarized wave and a Y-polarized wave are modulated into an I signal and a Q signal of a quadrature phase, respectively.

5. The optical transmission and reception device according to any one of claims 1 to 3, wherein
a QPSK signal is used as the first pilot symbol signal and the second pilot symbol signal.

6. The optical transmission and reception device according to any one of claims 1 to 3, wherein
the second symbol period of the second pilot symbol signal is an integer multiple of equal to or more than two of the first symbol period of the first pilot symbol signal.

7. An optical receiver comprising:
an optical coherent detecting unit to receive polarization-multiplexed modulated light into which a first pilot symbol signal having a first symbol period and a second pilot symbol signal having a second symbol period different from the first symbol period are inserted, coherently detect the received modulated light, and output an analog electric signal;
an analog-to-digital conversion unit to perform analog-to digital conversion on the analog electric signal from the optical coherent detecting unit to output the signal as a digital signal; and
a reception-side digital signal processing unit including a frequency difference compensating unit to receive the digital signal from the analog-to-digital conversion unit, calculate a phase difference using the first pilot symbol signal having the first symbol period and the second pilot symbol signal having the second symbol period different from the first symbol period and adjacent to the first pilot symbol signal, the first pilot symbol signal and the second pilot symbol signal being inserted into the received polarization-multiplexed modulated light extracted from the received digital signal, and compensate a frequency of the received digital signal.
